# EUROPEAN PATENT SPECIFICATION

(11) **EP 0 586 990 B1**
(45) Date of publication and mention of the grant of the patent: **28.10.1998**
(21) Application number: 93113759.0
(22) Date of filing: 27.08.1993
(51) Int. Cl.: G11B 7/24, C08F 220/20, C09D 4/00

(54) **Ultraviolet-curing resin for protecting coat of optical disk**
UV-härtbares Harz als Schutzschicht für optische Platten
Résine polymérisant sous UV comme couche protectrice pour disque optique

(30) Priority: 31.08.1992 JP 232187/92
(43) Date of publication of application: 16.03.1994
(73) Proprietor: SONY CHEMICALS CORPORATION, Kanuma-shi, Tochigi (JP)
(72) Inventor: Kominami, Hiraku, Kanuma-shi, Tochigi (JP); Saotome, Harumi, Kanuma-shi, Tochigi (JP)
(74) Representative: Müller, Frithjof E., Dipl.-Ing.

(56) References cited:
- EP-A- 0 321 704
- EP-A- 0 378 144
- EP-A- 0 453 149
- US-A- 4 983 505
- DATABASE WPI Section Ch, Week 9231, Derwent Publications Ltd., London, GB; Class A14, AN 92-255082 & JP-A-4 172 634 (NIPPON KAYAKU KK) 19 June 1992

## Description

The present invention relates to an ultraviolet-curing resin compound suitable for use as a protective film on an optical disk such as a compact disk, or a magnetooptical disk, and an optical disk having such an ultraviolet-curing resin compound used as a protective film.

### Description of the Relevant Art:

One type of optical disk which can record, erase, and reproduce information with a light beam is known as a magnetooptical disk.

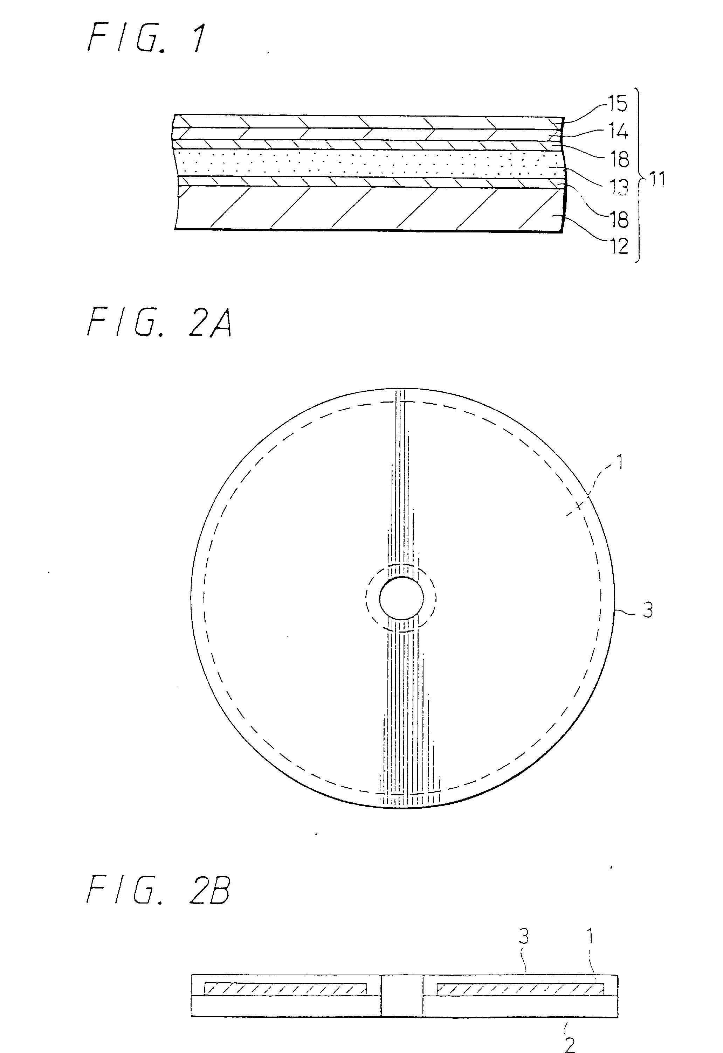

As shown in FIG. 1 of the accompanying drawings, a magnetooptical disk 11 comprises a transparent substrate 12, a protective film 18 of SiN disposed on the transparent substrate 12, a magnetooptical recording layer 13 comprising a perpendicular magnetization film disposed on the protective film 18, another protective film 18 of SiN disposed on the magnetooptical recording layer 13, a reflecting film 14 comprising a thin film of metal such as aluminum disposed on the protective film 18, and a protective film 15 of ultraviolet-curing resin disposed on the reflecting film 14.

The ultraviolet-curing resin used as the protective film 15 serves to prevent the magnetooptical recording layer 13 and the reflecting film 14 from being eroded. Therefore, it is necessary that the ultraviolet-curing resin be of low water vapor transmission after it has been cured by exposure to ultraviolet radiation.

Before the ultraviolet-curing resin is cured by exposure to ultraviolet radiation, it so preferably be of low viscosity to facilitate its application to the disk surface.

There have heretofore been available no ultraviolet-curing resins which have sufficiently low viscosity before being cured by exposure to ultraviolet radiation, can prevent the magnetooptical recording layer 13 and the reflecting film 14 from being eroded after cured by exposure to ultraviolet radiation, highly reliably particularly at high temperature and high moisture. Therefore, there has been a demand for a protective film which can meet such viscosity and protection requirements. For example, protective films used to protect reflecting films of compact disks suffer the lack of such viscosity and protection requirements. In the EP-A-0 321 704 an optical recording medium is described, which is resistant to oxidation deterioration and which is provided by forming an organic protecting adhesive layer of a UV-cured resin comprising 15 to 85% by weight of acrylate and/or methacrylate having at least three functionalities, 15 to 70% by weight of a compound having a linear structure and having a molecular weight of at least 300, and a photopolymerisation initiator.

JP-A-4172634 discloses a material for protecting optical discs comprising an acrylate ester having a functionality of at least 3, an ethylenically unsaturated, monofunctional compound, a photopolymerisation initiator, and an electroconductive powder comprising SnO or In₂O₃.

The EP-A-0 378 144 relates to a liquid resin composition which can be polymerized by radiation and which contains a difunctional monomeric or polymeric acrylate or methacrylate, a tri- or polyfunctional acrylate or methacrylate, and at least one unsaturated monofunctional monomeric compound of a specific formula.

In the US-A-4,983,505 an optical recording medium is disclosed which comprises at least one recording layer on a substrate and a protective layer overlying the recording layer, the protective layer comprising a UV cured resin composition containing a urethane acrylate, N-vinylpyrolidone, a trifunctional or higher functional acrylate, and a photoinitiator.

The EP-A-0 453 149 describes a cross-linkable polymeric casting composition including a polyoxy alkylene glycol diacrylate or dimethacrylate, a monomer having a recurring unit derived from at least one radical-polymerisable bisphenol monomer capable of forming a homopolymer having a refractive index of more than 1,55 and a urethane monomer having 2 to 6 terminal groups selected from a group comprising acrylic and methacrylic groups.

It is therefore an object of the present invention to provide an ultraviolet-curing resin compound capable of sufficiently protecting recording and reflecting films at high temperature and high moisture, and an optical disk using such an ultraviolet-curing resin compound as a protective film.

According to an aspect of the present invention, there is provided an ultraviolet-curing resin compound consisting of 5 ~ 50 weight % of trifunctional or polyfunctional acrylic ester or methacrylic ester, 95 ~ 50 % of acrylic ester or methacrylic ester of cyclic structure, and 0.2 ~ 20 parts by weight of a photopolymerization initiator with respect to a total of 100 parts by weight of the trifunctional or polyfunctional acrylic ester or methacrylic ester and the acrylic ester or methacrylic ester of cyclic structure.

According to another aspect of the present invention, there is also provided an optical disk having a protective film made of such an ultraviolet-curing resin compound which has been cured by exposure to ultraviolet radiation.

The trifunctional or polyfunctional acrylic ester may comprise a monomer of polyfunctional acrylic ester of functionality 3 or more or a blend of such a monomer and an oligomer of trifunctional or polyfunctional acrylic ester.

The monomer of trifunctional or polyfunctional acrylic ester may be, for example, trimethylol-propane trimethacrylate, trimethylolpropane triacrylate, EO (ethylene oxide) modified trimethylolpropane triacrylate, PO (polypropylene oxide) modified trimethylolpropane triacrylate, epichlorohydrin trimethylolpropane triacrylate, pentaerythritol triacrylate, pentaerythritol tetraacrylate, dipentaerythritol hexaacrylate, dipentaerythritol monohydroxy pentaacrylate, tetrafunctional polyester acrylate (e.g., Aronix M8100® manufactured by TOAGOSEI Chemical Industry Co., Ltd.), hexafunctional urethane acrylate (e.g., Artresin UN-3320HA®, UN-3320HB®, UN-3320HC® manufactured by NEGAMI Industry Co., Ltd.), tetrafunctional urethane acrylate (e.g., NK Ester U-4HA® manufactured by SHINNAKAMURA Chemical Industry Co., Ltd.), or hexafunctional urethane acrylate (e.g., UCB Ebecryl 220®, Ebecryl 1290® manufactured by DAICEL Chemical Industry Co., Ltd.).

The blend of a monomer of trifunctional or polyfunctional acrylic ester and an oligomer of trifunctional or polyfunctional acrylic ester may be, for example, trifunctional polyester acrylate (e.g., Aronix M7100® manufactured by TOAGOSEI Chemical industry Co., Ltd.), trifunctional or hexafunctional epoxy acrylate (Riboxy SP-4010® manufactured by SHOWA High Polymer Co., Ltd.), or tetrafunctional or penta-functional epoxy acrylate (Riboxy SP-4060® manufactured by SHOWA High Polymer Co., Ltd.).

The (metha)acrylic ester of cyclic structure may comprise, for example, monocyclic hydrocarbon such as cyclopropane, cyclohexane, or benzene with acrylic ester added, polycyclic hydrocarbon having two or more condensed rings with acrylic ester added, crosslinked cyclic hydrocarbon with acrylic ester added, or spirohydrocarbon with acrylic ester added. Specifically, the (metha)acrylic ester of cyclic structure may be, for example, acrylic isocyanurate, EO modified bisphenol A diacrylate, EO modified bisphenol S diacrylate, bisphenol A diacrylate, EO modified bisphenol A dimetacrylate, EO modified bisphenol F diacrylate, dicyclopentanile diacrylate, methoxycyclohexyl diacrylate, ECH modified phthalic diacrylate, tetrabromo-bisphenol A diacrylate, or neopentyl glycol modified trimethylolpropane diacrylate.

The photopolymerization initiator may be of acetophenone, benzoin, benzophenone, or thioxanthone, for example. The photopolymerization initiator of acetophenone or benzoin is used alone, and the photopolymerization initiator of benzophenone or thioxanthone is used in combination with a photopolymerization initiation assistant. The photopoly-merization initiation assistant may be of amine, sulfone, or phosphine, for example.

Because of different chemical structures (molecular bonding energies), there are two types of radical forming mechanisms for the photopolymerization initiator, i.e., a molecular bonding cleavage type (P1 type) and an inter-molecular dehydrogenetion type (P2 type). The photopoly-merization initiator of P1 type corresponds to a photopolymerization initiator of acetophenone or benzoin, and the photopolymerization initiator of P2 type corresponds to a photopolymerization initiator of benzophenone or thioxanthone

Specifically, the photopolymerization initiator of acetophenone may be, for example, 4-phenoxydichloroaceto-phenone, 4-t-butyl-dichloroacetophenone, 4-t-butyl-trichloroacetophenone, diethoxyacetophenone, 2-hydroxy-2-methyl-[-phenylpropane-1-one, 1-(4-Isopropylphenyl)-2-hydroxy-2-methylpropane-1-one, 1-14-dodecylphenyl)-2-hydroxy-2-methylpropane-1-one, 4-(2-hydroxyethoxy)-phenyl (2-hydroxy-2-propyl)ketone, 1-hydroxydicyclohexyl phenyl ketone, 2-methyl-1-[4-(methylthio)phenyl]-2-morpholinopropane-1, or Darocure 2273®, 1164® (manufacured by MERCK Co., Ltd.).

The photopolymerization initiator of benzoin may be, or example, benzoin, benzoin methyl ether, benzoin and methyl ether, benzoin isopropyl ether, benzoin isobutyl ether, or benzyl dimethyl ketal.

The photopolymerization initiator of benzophenone may be, for example, benzophenone, benzoilbenzoic acid, benzoilbenzoic acid methyl ether, 4-phenylbenzophenone, hydroxybenzophenone, 4-benzoyl-4-benzoyl-4'-methyldiphenylsulfide, or 3-3'-dimethyl-4-methoxybenzophenone.

The photopolymerization initiator of thioxanthone may be, for example, thioxanthone, 2-chlorthioxanthone, 2,4-dimethylthioxanthone, isopropylthioxanthone, 2,4-dichlorothioxanthone, 2,4-diethylthioxanthone, or 2,4-diisopropylthioxanthone

The photopolymerization initiation assistant for use with the photopolymerization initiator of benzophenone or thioxanthone may be, for example, triethanolamine, methyl-diethanolamine, triisopropanolamine, 4,4'-dimethylaminobenzophenone, 4,4'-diethylaminobenzophenone, 2-dimethylamino ethyl benzoate, 4-dimethylamino ethyl benzoate, 4-dimethylamino ethyl benzoate (n-butoxy), 4-dimethylamino isoamyl benzoate, or 4-dimethylamino benzoic acid 2-ethylhexy.

It is possible to use photopolymerization initiators of P1 type or photopolymerization initiators of P1 type and P2 type at the same time.

The trifunctional or polyfunctional acrylic ester or methacrylic ester and the acrylic ester or methacrylic ester of cyclic structure are used at a composition ratio of 5 ~ 50 weight % and 95 ~ 50 weight %, respectively. Preferable, the trifunctional or polyfunctional acrylic ester or methacrylic ester and the acrylic ester or methacrylic ester of cyclic structure are used at a composition ratio of 5 ~ 40 weight % and 95 - 60 weight %, respectively.

The photopolymerization initiator is added at a composition ratio of 0.2 ~ 20 parts by weight with respect to a total of 100 parts by weight of the trifunctional polyfunctional acrylic ester or methacrylic ester and the acrylic ester or methacrylic ester of cyclic structure.

Because the trifunctional or polyfunctional acrylic ester or metacrylic ester and the acrylic ester or metacrylic ester of cyclic structure are combined with each other, the viscosity of ultraviolet-curing resin compound is kept at a low level before it is cured by exposure to ultraviolet radiation. The low viscosity allows the ultraviolet-curing resin compound to be applied easily for high efficiency.

After being cured by exposure to ultraviolet radiation, the ultraviolet-curing resin compound has low water vapor transmission and can be attached highly intimately to a substrate. As a result, the ultraviolet-curing resin compound used as a protective film is highly reliable in preventing recording and reflecting films from being eroded at high temperature and high moisture. Therefore, an optical disk with the ultraviolet-curing resin compound used as a protective film is highly resistant to erosion.

The above and other objects, features, and advantages of the present invention will become apparent from the following description of illustrative embodiments thereof to be read in conjunction with the accompanying drawings, in which like reference numerals represent the same or similar objects.
FIG. 1 is a cross-sectional view of a magnetooptical disk;
FIG. 2A is a plan view of an optical disk;
FIG. 2B is a cross-sectional view of the optical disk shown in FIG. 2A; and
FIG. 3 is a cross-sectional view showing the manner in which the optical disk is observed for a pinhole.

### DETAILED DESCRIPTION OF THE PREFERRED EMBODIMENTS

### <<Inventive Examples 1 ~ 8>>

A blend (Aronix M8060®, M8030® manufactured by TOAGOSEI Chemical Industry Co., Ltd.) of a monomer of trimethylolpropane trimethacrylate and an oligomer of polyester acrylate which comprises an esterified material composed of polyhydric alcohol and polybasic acid with acrylic acid added, was used as trifunctional or polyfunctional acrylic ester.

Bifunctional dicyclopentanile diacrylate (DCPDA) was used as acrylic ester of cyclic structure. 2-hydroxy-2-methyl-1-phenylpropane-1-one (Darocure 1173® manufactured by MERCK Co., Ltd.) was used as a photopolymerization initiator.

These materials were compounded at ratios given in Table 1 below, thus preparing ultraviolet-curing resin solutions.

**[Table 1]**

| | IE 1 | IE 2 | IE 3 | IE 4 | IE 5 | IE 6 | IE 7 | IE 8 |
|---|---|---|---|---|---|---|---|---|
| Aronix M8060® | 5 | 20 | 30 | 45 | - | - | - | - |
| Aronix M8030® | - | - | - | - | 5 | 20 | 30 | 45 |
| DCPDA | 95 | 80 | 70 | 55 | 95 | 80 | 70 | 55 |
| Darocure 1173® | 6 | 6 | 6 | 6 | 6 | 6 | 6 | 6 |
| IE: Inventive Example | | | | | | | | |
| Note: The numerals in Table 1 indicate parts by weight. Aronix M8060®, M8030® : Trifunctional or polyfunctional acrylate. | | | | | | | | |
| DCPDA: Acrylate of cyclic structure. | | | | | | | | |
| Darocure 1173®: Photopolymerization initiator. | | | | | | | | |

### <<Comparative Examples 1 ~ 3>>

As shown in Table 2 below, either one of the above trifunctional or polyfunctional acrylic ester and the above acrylic ester of cyclic structure, and the photopolymerization initiator were used to prepare ultraviolet-curing resin solutions.

**[Table 2]**

| | CE 1 | CE 2 | CE 3 |
|---|---|---|---|
| Aronix M8060® | - | 100 | - |
| Aronix M8030® | - | - | 100 |
| DCPDA | 100 | - | - |
| Darocure 1173® | 6 | 6 | 6 |
| CE: Comparative Example | | | |
| Note: The numerals in Table 2 indicate parts by weight. Aronix M8060®, M8030®: Trifunctional or polyfunctional acrylate. | | | |
| DCPDA: Acrylate of cyclic structure. | | | |
| Darocure 1173®: Photopolymerization initiator. | | | |

### «Comparative Example 4>>

As shown in Table 3 below, 50 parts by weight of urethane acrylate (EB230® manufactured by DAICEL Chemical Industry Co., Ltd.) as bifunctional acrylic ester, 50 parts by weight of hexanediol diacrylate (HDDA) as a monomer of bi-functional acrylic ester with no cyclic structure, and 1 part by weight of the above photopolymerization initiator were used to prepare an ultraviolet-curing resin solution.

**[Table 3]**

| | Comparative Example 4 |
|---|---|
| Urethane acrylate (bifunctional) | 50 |
| HDDA (bifunctional) | 50 |
| Darocure 1173® (photopolymerization initiator) | 1 |
| Note: The numerals in Table 3 indicate parts by weight. | |

### <<Comparative Example 5>>

As shown in Table 4 below, 50 parts by weight of acid-functional bisphenol A epoxy acrylate (EB230® manufactured by DAICEL Chemical Industry Co., Ltd.) as bifunctional acrylic ester, 50 parts by weight of tetrahydrofurfuryl acrylate (THFA) as monofunctional acrylic ester, and 1 part by weight of the above photopolymerization initiator were used to prepare an ultraviolet-curing resin solution.

**Table 4**

| | Comparative Example 5 |
|---|---|
| Acid-functional bisphenol A epoxy acrylate (bifunctional) | 50 |
| THFA (monofunctional) | 50 |
| Darocure 1173® (photopolymerization initiator) | 1 |
| Note: The numerals in Table 3 indicate parts by weight. | |

The viscosities of the ultraviolet-curing resin solutions according to all of the above Inventive and , Comparative Examples were measured using a cone-plate-type viscometer. The measured viscosities are shown in Table 7.

The viscometer was manufactured by Harke Co., Ltd., and used in combination with sensor system PK100, measuring system Rofovisco RV20-M5, and sensor PK5.1".

Each of the samples had a volume of 0.5 cm³, and the shear rate was 1000 s-1/m.

The hardnesses of the resins achieved when the ultraviolet-curing resin solutions according to all of the above Inventive and Comparative Examples were cured by exposure to ultraviolet radiation were measured according to JISK5400. The measured hardnesses are shown in Table 7.

The ultraviolet radiation was produced by a metal halide lamp (UVC-2533/1MNL C6-UDO® manufactured by Ushio Electric Inc.). The metal halide lamp was held at a height of 10 cm, and the integrated light intensity was 300 mJ/cm².

The water vapor transmissions of the resins achieved when the ultraviolet-curing resin solutions according to all of the above Inventive and Comparative Examples were cured by exposure to ultraviolet radiation were measured. The measured hardnesses are shown in Table 7.

The hardnesses were measured according to JISZ0208 which provides a process of using a water vapor transmitting cup to test the water vapor transmission of a moisture-resistant packaging material such as plastic film, or processed paper.

The erosion-prevention ability of protective films for optical disks was evaluated as follows:

First, the ultraviolet-curing resin solutions according to the above Inventive and Comparative Examples were applied by spin coating to aluminum-evaporated substrates of polycarbonate having a diameter of 8,89 cm (3.5 inches) and a thickness of 1.2 mm. Then, ultraviolet radiation was applied to the coated ultraviolet-curing resin solutions, forming protective films having a thickness of 10 µm.

The spin coater used to apply the ultraviolet-curing resin solutions was MIKASA SPINCOATER 1H-DXII® manufactured by MIKASA Co., Ltd. The ultraviolet-curing resin solutions were applied under the conditions given in Table 5 below.

**Table 5**

| | Thickness (µm) | Rotational speed (RPM) | Spin-out time (s) | Viscosity (mPa·S) |
|---|---|---|---|---|
| IE 1 | 10 | 3000 | 4.7 | 175 |
| IE 2 | 11 | 3000 | 6.0 | 220 |
| IE 3 | 11 | 3000 | 8.0 | 300 |
| IE 4 | 11 | 3000 | 14.5 | 540 |
| IE 5 | 9 | 3000 | 3.8 | 145 |
| IE 6 | 10 | 3000 | 4.2 | 155 |
| IE 7 | 10 | 3000 | 4.6 | 170 |
| IE 8 | 10 | 3000 | 5.4 | 200 |
| CE 1 | 10 | 3000 | 3.8 | 140 |
| CE 2 | - | 3000 | - | 10000 |
| CE 3 | 11 | 3000 | 16 | 600 |
| CE 4 | 11 | 3000 | 12 | 463 |
| CE 5 | 10 | 3000 | 3.8 | 140 |

The coated substrates were placed in an oven at 85°C, 95 %RH, aged for 100 hours, and then measured for an increased number of pinholes due to erosion of the aluminum layer.

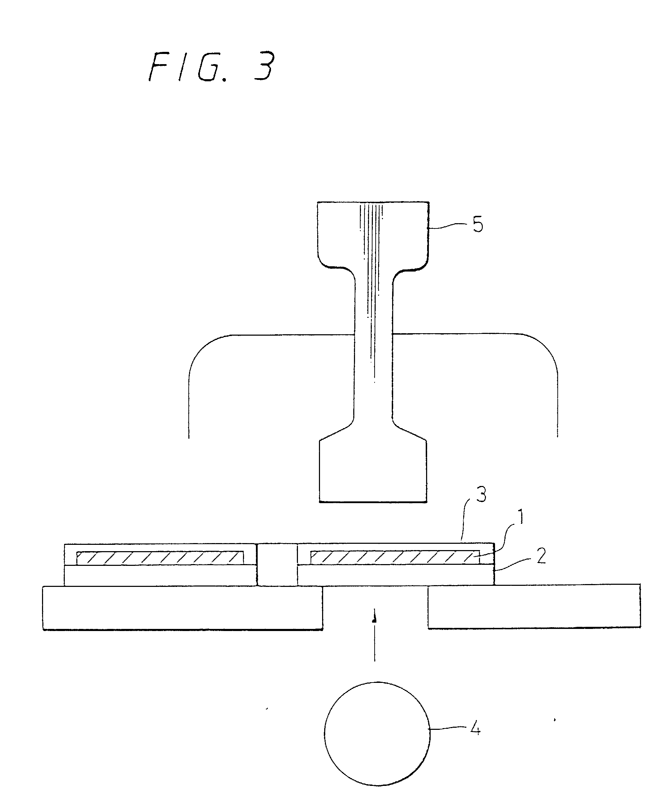

The nature of such pinholes will be described below. For example, a compact disk has a reflecting film of aluminum deposited on a substrate by sputtering, and a magnetooptical disk has a dielectric film, a magnetooptical recording film, a dielectric film, and a reflecting film of aluminum net are successively deposited on a substrate by sputtering. These sputtered films are coated with a protective film of organic material because they are highly susceptible to erosion. More specifically, as shown in FIGS. 2A and 2B, an inorganic layer 1 as of aluminum in an optical disk is sandwiched between a substrate 2 and a protective film 3. As shown in FIG. 3, when the optical disk is irradiated with light from a light source 4 below the optical disk and the optical disk is observed with a microscope 5 above the optical disk, no light can be confirmed because of the opaque inorganic layer 1. If, however, the optical disk that has been left at high temperature and high moisture is similarly observed, small circular holes called pinholes that have been produced due to erosion of the inorganic layer 1 can be observed.

According to the present invention, the pinholes are classified into different size groups whose sizes range from 0 to 10 µm, 10 to 30 µm, 30 to 50 µm, 50 to 100 µm, and 100 µm or greater. If the size of a pinhole is 100 µm or greater or ranges from 50 to 100 µm, and the pinhole suffers growing erosion, then that pinhole is counted. Evaluation levels are determined according to the number of pinholes counted in an area of 7.5 cm², as shown in Table 6 below.

**Table 6**

| Increased number of pinholes | Evaluation levels |
|---|---|
| 100 or more | C |
| 10 ∼ 100 | B |
| 10 or less | A |

Erosion resistance of the samples as represented by the evaluation levels is given in Table 7.

The polycarbonate substrates, described above, were coated with ultraviolet-curing resin solutions to a thickness ranging from 10 to 15 µm, and then exposed to ultraviolet radiation to cure the coated ultraviolet-curing resin solutions into protective films. The adhesiveness of the protective films to the polycarbonate substrate was evaluated according to the checkerboard method and the checkerboard tape method. The results are given in Table 7.

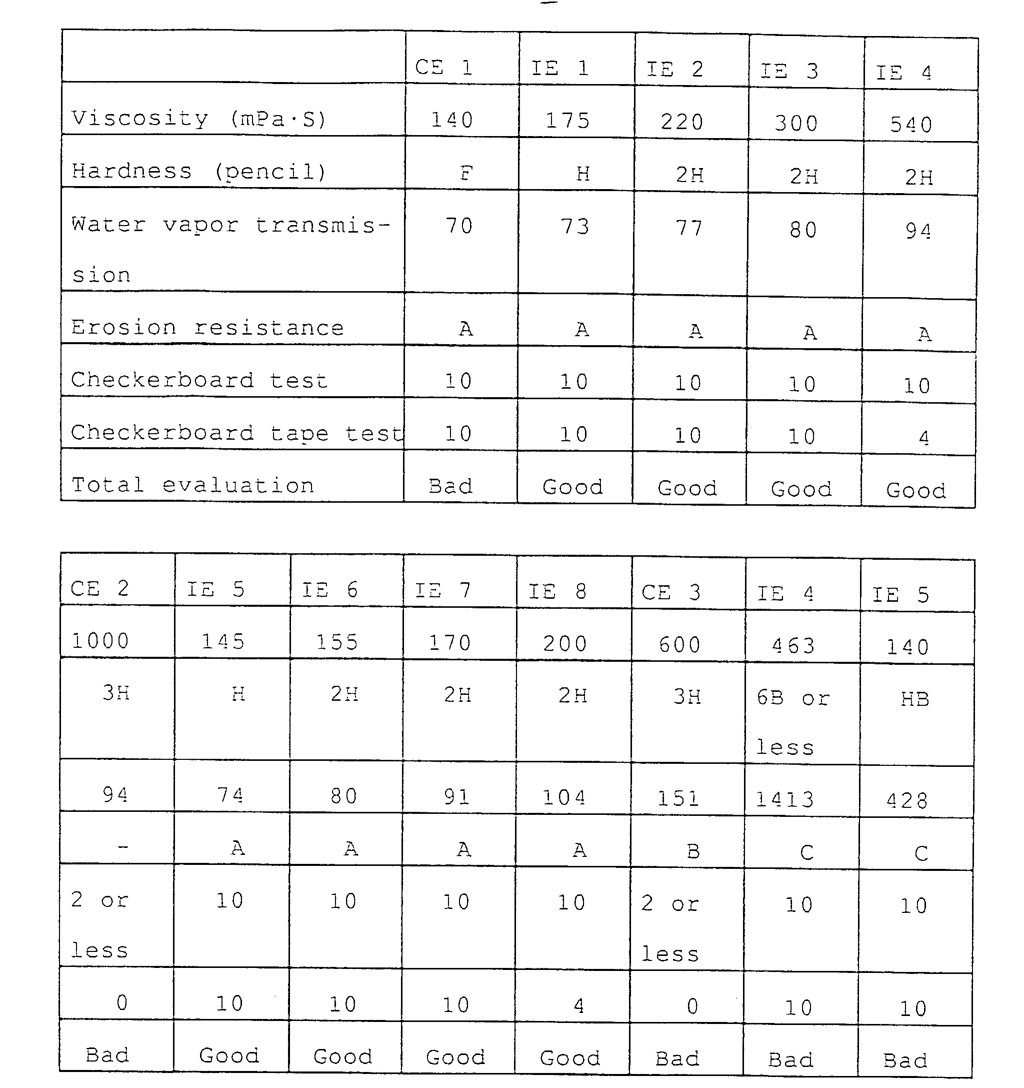

The abilities of the protective films according to the Inventive and Comparative Examples will be evaluated below based on the results shown in Table 7. In order for a protective film to be totally evaluated as good, it must satisfy all the items regarding viscosity, hardness, water vapor transmission, and adhesiveness. The data of water vapor transmission and adhesiveness can be one of the criteria for judging the development of erosion.

Those samples which have a erosion resistance rank A, a hardness range H or higher, and a viscosity value of 600 mPa·S or lower were judged as good, and those which do not have such values were judged as bad.

### Viscosity:

An ultraviolet-curing resin composition can be spin-coated if its viscosity is of 700 mPa·S or lower. As can be understood from Table 7, the viscosity should preferably be lower for higher coating efficiency. The viscosity of 600 mPa·S is a level which will practically be free of problems. Table 7 indicates that Inventive Examples 1 ∼ 8 satisfy these conditions.

### Hardness:

For effectively performing the functions as a hardened film, a coating material, and a protective film, it is necessary for a coated and cured ultraviolet-curing resin to protect the attached surface and also to be hard enough not to be scratched by at least human fingernails, i.e., to be of a pencil hardness of H or more.

As can be seen from Table 7, the ultraviolet-curing resins according to Inventive Examples 1 ∼ 8 satisfy these conditions.

If the ultrasonic-curing resin is composed only of acrylic ester of cyclic structure as in Comparative Example 1, then since its pencil hardness is F, it is not suitable as a coating material and a protective film. The hardnesses of the ultrasonic-curing resins according to Comparative Examples 4, 5 are much lower.

### Water vapor transmission:

As indicated by Comparative Examples 3 ∼ 5 in Table 7, a film property that influences the erosion resistance to a largest extent is water vapor transmission. Even though the adhesiveness is good, much erosion will be developed if the water vapor transmission is high, particularly 400 or greater.

It is preferable that the water vapor transmission be 150 or less. The smaller the water vapor transmission, the greater the erosion resistance. Table 7 shows that the ultraviolet-curing resins according to Inventive Examples 1 ∼ 8 satisfy these conditions.

### Erosion resistance:

Erosion is induced by various factors including the water vapor transmission, adhesiveness, the hardness, and ions, of the resin films that have been cured by ultraviolet radiation. As can be understood from Table 7, the ultraviolet-curing resins according to Inventive Examples 1 ∼ 8 do no develop many pinholes even at high temperature and high moisture, and have high erosion resistance.

### Adhesiveness:

As can be seen from Table 7, the ultraviolet-curing resins according to Inventive Examples 1 ∼ 8 give good results sults in the checkerboard test and the checkerboard tape test, and produce protective films with high adhesiveness.

As can be understood from Comparative Examples 2, 3, the ultraviolet-curing resins composed only of trifunctional or polyfunctional acrylic ester and a photopolymerization initiator can easily be peeled off when incised by a cutter, and hence are problematic when used as a protective film.

As is apparent from the above results, the ultraviolet-curing resins according to Inventive Examples 1 - 8 are of low viscosity, low water vapor transmission, high hardness, high adhesiveness, and high reactivity, and are highly reliable when used as a protective film for protecting recording and reflecting films of an optical disk.

The principles of the present invention are applicable to all optical disks including compact disks and magnetooptical disks, and are effective irrespective of whether a magnetic head is held in contact with a recording medium or not.

## Claims

1. An ultraviolet-curing resin compound consisting of 5 - 50 weight % of trifunctional or polyfunctional acrylic ester or methacrylic ester, 95 - 50 % of acrylic ester or methacrylic ester of cyclic structure, and 0.2 - 20 parts by weight of a photopolymerization initiator with respect to a total of 100 parts by weight of the trifunctional or polyfunctional acrylic ester or methacrylic ester and the acrylic ester or methacrylic ester of cyclic structure.

2. An optical disk having a protective film made of an ultraviolet-curing resin compound according to claim 1, which has been cured by exposure to ultraviolet radiation.

## Patentansprüche

1. UV-härtbare Harzverbindung, bestehend aus 5 - 50 Gewichts-% aus trifunktionalem oder polyfunktionalem Acrylester oder Methacrylester, 95 - 50 Gewichts-% aus Acrylester oder Methacrylester einer zyklischen Struktur und 0,2 - 20 Gewichtsteilen eines Photopolymerisations-Initiators in bezug auf eine Gesamtheit von 100 Gewichtsteilen des trifunktionalen oder polyfunktionalen Acrylesters oder Methacrylesters und des Acrylesters oder Methacrylesters der zyklischen Struktur.

2. Optische Platte mit einem Schutzfilm, der aus einer UV-härtbaren Harzverbindung nach Anspruch 1 hergestellt ist, welche durch Bestrahlung mit ultravioletter Strahlung ausgehärtet wurde.

## Revendications

1. Composé de résine durcissable par ultraviolets constitué de 5 à 50 % en poids d'un ester acrylique ou d'un ester méthacrylique trifonctionnel ou polyfonctionnel, de 95 à 50 % d'un ester acrylique ou un ester méthacrylique ayant une structure cyclique, et de 0,2 à 20 parties en poids d'un initiateur de photopolymérisation par rapport à la totalité des 100 parties en poids de l'ester acrylique ou l'ester méthacrylique trifonctionnel ou polyfonctionnel et de l'ester acrylique ou de l'ester méthacrylique de structure cyclique.

2. Disque optique ayant un film protecteur fabriqué avec un composé de résine durcissable par ultraviolets selon la revendication 1, qui a été durcie par exposition à une radiation ultraviolette.
